# EUROPEAN PATENT APPLICATION

(11) **EP 4 773 303 A1**
(43) Date of publication of application: **08.07.2026**
(21) Application number: 24908074.8
(22) Date of filing: 18.12.2024
(51) Int. Cl.: H01M 10/0567, H01M 10/0569, H01M 10/052, H01M 4/525, H01M 4/505

(54) **NONAQUEOUS ELECTROLYTE AND LITHIUM SECONDARY BATTERY COMPRISING SAME**

(30) Priority: 21.12.2023 KR 20230189042
(71) Applicant: LG Energy Solution, Ltd., Seoul 07335 (KR)
(72) Inventor: LEE, Jae Won, Daejeon 34122 (KR); LEE, Jung Hoon, Daejeon 34122 (KR); LEE, Chul Haeng, Daejeon 34122 (KR)
(74) Representative: Hoffmann Eitle
(86) International application number: PCT/KR2024/020627
(87) International publication number: WO 2025/135791

(57) **Abstract**

The present disclosure provides a non-aqueous electrolyte comprising a lithium salt, an organic solvent and a compound represented by Formula 1: 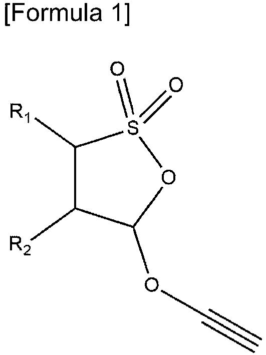 wherein, in Formula 1, R₁ and R₂ are each independently any one selected from a group consisting of H, -OC=CH, F, a nitrile group, an alkyl group having 1 to 10 carbon atoms, an alkenyl group having 2 to 10 carbon atoms, and an alkynyl group having 2 to 10 carbon atoms.

## Description

### [TECHNICAL FIELD]

### Cross-reference to Related Applications]

This application claims priority from Korean Patent Application No. 10-2023-0189042, filed on December 21, 2023, the disclosure of which is incorporated by reference herein.

### [Technical Field]

The present disclosure relates to a non-aqueous electrolyte and a lithium secondary battery comprising the same.

### [BACKGROUND ART]

Recently, there is a growing demand for high-capacity, high-output and high-stability secondary batteries as the application area of lithium secondary batteries has rapidly expanded to not only power supply for electronic devices such as electric, electronics, communication, and computers, but also power storage and supply for largearea devices such as automobiles and power storage devices.

In particular, the significance of high capacity, high output, and long life characteristics is growing in lithium secondary batteries used for vehicles. In order to achieve the high capacity of secondary batteries, it may use a high-ni content positive electrode active material having high energy density but low stability, or drive the secondary batteries at high voltage.

However, when the secondary battery is driven under the above conditions, as charging and discharging proceeds, the surface structure of an electrode or a film formed on the surface of positive/negative electrodes deteriorates due to a side reaction caused by electrolyte deterioration, and thus transition metal ions may be eluted from the surface of the positive electrode. As described above, since the eluted transition metal ions are electro-deposited on the negative electrode and reduce the passivation ability of a solid electrolyte interphase (SEI), there occurs a problem in that the negative electrode deteriorates.

This deterioration phenomenon of the secondary battery tends to be further accelerated when the potential of the positive electrode is increased or when the battery is exposed to high temperatures.

In addition, when the lithium ion battery is continuously used for a long period of time or left to stand at high temperatures, gas is generated, thereby causing a so-called swelling phenomenon in which the thickness of the battery increases, and it is known that the amount of gas generated in this case depends on the state of the SEI.

Therefore, in order to solve the above problem, research and development are being conducted on methods capable of suppressing the elution of metal ions from the positive electrode and forming a stable SEI film on the negative electrode, thereby reducing the swelling phenomenon in secondary batteries, and increasing stability at high temperatures.

### [DISCLOSURE OF THE INVENTION]

### [TECHNICAL PROBLEM]

As a result of conducting diverse research to solve the above problem, the present disclosure aims to provide an additive for a non-aqueous electrolyte capable of suppressing the degradation of a positive electrode, reducing side reactions between a positive electrode and an electrolyte, and forming a stable SEI film on a negative electrode.

Furthermore, the present disclosure aims to provide a non-aqueous electrolyte with improved stability at high temperatures by including the additive for a non-aqueous electrolyte.

In addition, the present disclosure aims to provide a lithium secondary battery with improved overall performance by having improved high-temperature cycle properties and high-temperature storage properties by including the above-described non-aqueous electrolyte.

### [TECHNICAL SOLUTION]

[1] The present disclosure provides a non-aqueous electrolyte comprising a lithium salt, an organic solvent and a compound represented by Formula 1 below: 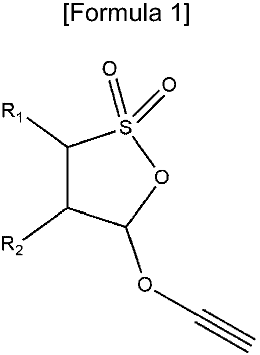 wherein, in Formula 1, R₁ and R₂ are each independently any one selected from a group consisting of H, -OC≡CH, F, a nitrile group, an alkyl group having 1 to 10 carbon atoms, an alkenyl group having 2 to 10 carbon atoms, and an alkynyl group having 2 to 10 carbon atoms.
[2] The present disclosure may provide a non-aqueous electrolyte, wherein, in the above [1], the compound represented by Formula 1 above is any one selected from the group consisting of compounds represented by Formulas 1-2a to 1-2e below. 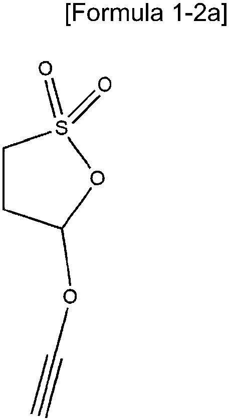 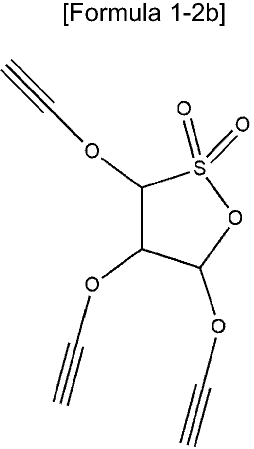 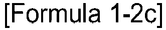 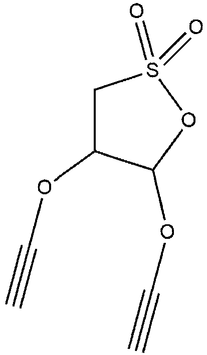 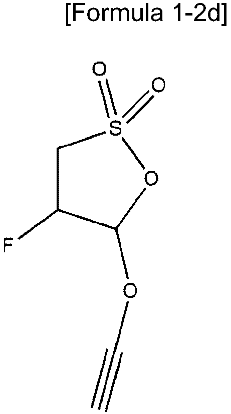 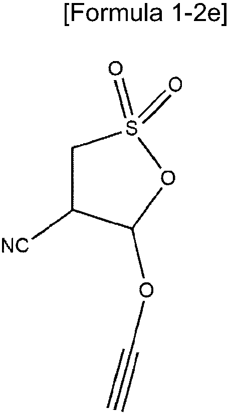
[3] The present disclosure may provide a non-aqueous electrolyte, wherein in the above [1] or [2], the compound represented by Formula 1 above is included in an amount of 0.01 parts by weight to 10 parts by weight based on 100 parts by weight of the non-aqueous electrolyte.
[4] The present disclosure may provide a non-aqueous electrolyte, wherein in any one of the above [1] to [3], the lithium salt is included at a mole concentration of 0.5 M to 2.0 M.
[5] The present disclosure may provide a non-aqueous electrolyte, wherein, in any one of the above [1] to [4], the lithium salt is one or more selected from LLiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂, LiN(SO₂CF₂CF₃)₂ and LiN(SO₂CF₃)₂.
[6] The present disclosure provides a non-aqueous electrolyte, wherein in any one of the above [1] to [5], the organic solvent includes at least one selected from the group consisting of a cyclic carbonate-based organic solvent, a linear carbonate-based organic solvent, a linear ester-based organic solvent, and a cyclic ester-based organic solvent.
[7] The present disclosure provides a non-aqueous electrolyte, further comprising one or more selected from a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound as an additive in any one of the above [1] to [6].
[8] The present disclosure may provide a lithium secondary battery comprising a positive electrode; a negative electrode, and any one of the non-aqueous electrolytes in the above [1] to [7].
[9] The present disclosure may provide a lithium secondary battery, wherein in the above [8], the positive electrode is a lithium-nickel-based oxide represented by [Formula 2] below as the positive electrode active material.

   [Formula 2] LiₓNiₐCo_{b}M¹_{c}M²_{d}O₂

   In Formula 2 above, M¹ is Mn, Al or a combination thereof, and M² is one or more selected from the group consisting of Zr, W, Y, Ba, Ca, Ti, Mg, Ta and Nb, where 0.8≤x≤1.2, 0.6≤a<1, 0<b<0.4, 0<c<0.4, and 0≤d≤0.1.
[10] The present disclosure may provide a lithium secondary battery, wherein in the above [8] or [9], the negative electrode includes SiOₓ(0≤x<2) as the negative electrode active material.

### [ADVANTAGEOUS EFFECTS]

The compound represented by Formula 1 provided as an additive for a non-aqueous electrolyte of the present disclosure is characterized in that the propargyl group and sultone ring are connected to an ether group. The additive of Formula 1 easily breaks the ether group bond during initial charging, and a compound having a sultone ring structure along with the propargyl group forms a polymeric organic film on the negative electrode.

In addition, the compound having a sultone ring structure remaining after the formation of the polymeric negative SEI film can be partially decomposed on the positive electrode surface to form a positive electrode protective film as the positive electrode reaches a high potential.

That is, when the non-aqueous electrolyte of the present disclosure including the compound of the Formula 1 is used, an electrode-electrolyte interface that is stable even at high temperatures and has low resistance can be formed, which improves high-temperature cycle properties and high-temperature storage properties, and thus a lithium secondary battery with improved overall performance may be implemented.

### [MODE FOR CARRYING OUT THE INVENTION]

It will be understood that terms or words used in the present disclosure and claims shall not be construed as being limited to having meanings defined in commonly used dictionaries, but should be interpreted as having meanings and concepts consistent with the technical idea of the present disclosure based on the principle that an inventor may appropriately define concepts of the terms to best explain the invention.

It will be further understood that the terms "include," "comprise," or "have" in this disclosure specify the presence of stated features, numbers, steps, elements, or combinations thereof, but do not preclude the presence or addition of one or more other features, numbers, steps, elements, or combinations thereof.

Also, the expressions "a" and "b" in the description of "a to b carbon atoms" in the disclosure each denote the number of carbon atoms included in a specific functional group. That is, the functional group may include "a" to "b" carbon atoms. For example, an "alkylene group having 1 to 5 carbon atoms" refers to an alkylene group including carbon atoms with a carbon number of 1 to 5, that is, -CH₂-, -CH₂CH₂-, -CH₂CH₂CH₂-, - CH₂(CH₃)CH-, -CH(CH₃)CH₂-, -CH(CH₃)CH₂CH₂- and the like.

In addition, in the present specification, an alkyl group, an alkenyl group, or an alkynyl group may all be substituted or unsubstituted. Unless otherwise defined in the specification, the expression "substitution" denotes that at least one hydrogen bonded to carbon is substituted with an element other than hydrogen, for example, a halogen atom such as F and Cl.

Hereinafter, the present disclosure will be described in more detail.

The non-aqueous electrolyte and/or lithium secondary battery according to the present disclosure may include at least one of the constitutions disclosed below, and may include any combination between technically possible constitutions among the following constitutions.

### Non-aqueous electrolyte

The non-aqueous electrolyte of the present disclosure is characterized by including the compound of Formula 1 below as an additive.

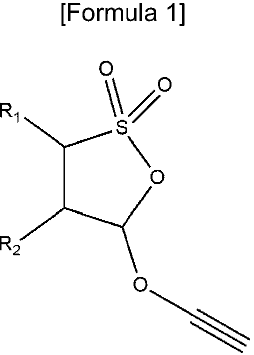

In Formula 1 above, R₁ and R₂ are each independently any one selected from the group consisting of H, -OC=CH, F, a nitrile group, an alkyl group having 1 to 10 carbon atoms, an alkenyl group having 2 to 10 carbon atoms, and an alkynyl group having 2 to 10 carbon atoms. Preferably, R₁ and R₂ may each independently be any one selected from the group consisting of H, -OC=CH, F, a nitrile group, an alkyl group having 1 to 5 carbon atoms, an alkenyl group having 2 to 5 carbon atoms, and an alkynyl group having 2 to 5 carbon atoms, and most preferably, may be H, -OC=CH, F, and a nitrile group.

The compound represented by Formula 1 provided as an additive for a non-aqueous electrolyte of the present disclosure is characterized in that the propargyl group and sultone ring are connected to an ether group. The additive of Formula 1 easily breaks the ether group bond during initial charging, and a compound having a sultone ring structure along with the propargyl group forms a polymeric organic film on the negative electrode. In particular, as the reactivity of the propane sultone group is at an appropriate level, it does not excessively increase the initial resistance and is not quickly consumed at the beginning, thereby improving the long-life performance of a lithium secondary battery including it.

In addition, the compound having a sultone ring structure remaining after the formation of the polymeric negative SEI film can be partially decomposed on the positive electrode surface to form a positive electrode protective film as the positive electrode reaches a high potential.

That is, when the non-aqueous electrolyte of the present disclosure including the compound of the Formula 1 is used, highly durable films are formed on the negative electrode and positive electrode, which improves high-temperature cycle properties and high-temperature storage properties. As a result, a lithium secondary battery with improved overall performance may be implemented.

Furthermore, in the case of the compounds of Formula 1 of the present disclosure, an OC=CH substituent is present at the 1st carbon of propane sultone, which is the site where propane sultone binds to human DNA, it exhibits the effect of reducing biotoxicity.

The additive for a non-aqueous electrolyte according to the present disclosure may be any one selected from the group consisting of Formulas 1-2a to 1-2e below.

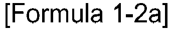

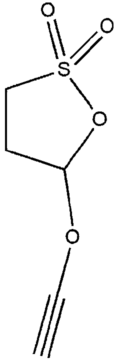

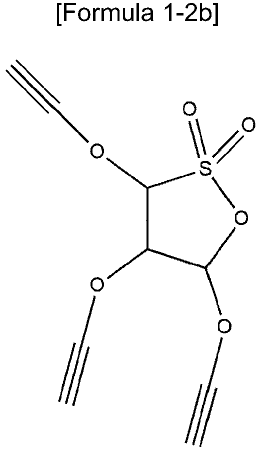

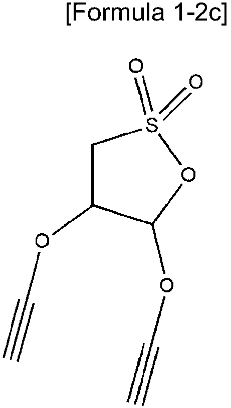

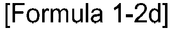

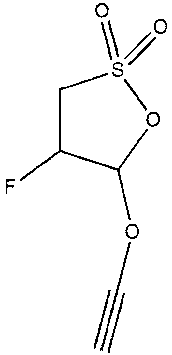

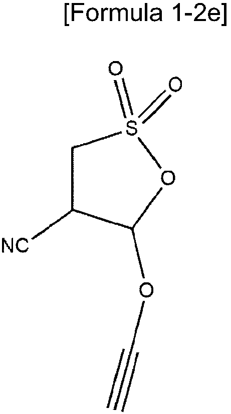

An additive for a non-aqueous electrolyte according to the present disclosure may be included in an amount of 0.01 parts by weight to 10 parts by weight, preferably 0.1 parts by weight to 5 parts by weight, more preferably 0.5 parts by weight to 1 parts by weight, based on 100 parts by weight of the non-aqueous electrolyte. When the content of the compound represented by Formula 1 above satisfies the above range, there is a sufficient effect of forming a film on the positive electrode, which suppresses the elution of transition metals from the positive electrode active material. The viscosity of the electrolyte may be maintained at a suitable level, thereby achieving an effect of having excellent rate properties or lifespan properties during high-temperature storage.

The non-aqueous electrolyte according to the present disclosure may comprise a lithium salt and an organic solvent.

The lithium salt is used as an electrolyte salt in a lithium secondary battery, and is used as a medium for transferring ions. Typically, the lithium salt may include Li+ as cations, and may include at least one selected from F⁻, Cl⁻, Br, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, ASF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as anions.

Specifically, the lithium salt may include a single material selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂ (lithium bis(fluorosulfonyl)imide, LiFSI), LiN(SO₂CF₂CF₃)₂ (lithium bis(perfluoroethanesulfonyl)imide, LiBETI) and LiN(SO₂CF₃)₂ (lithium bis(trifluoromethane sulfonyl)imide, LiTFSI), or a mixture of two or more thereof. In addition to these, lithium salts typically used in an electrolyte for a lithium secondary battery may be used without limitation.

The lithium salt may be appropriately changed in a normally usable range, but in order to obtain an optimum effect of forming an anti-corrosive film on the electrode surface, the lithium salt may be included in the electrolyte at a concentration of 0.5 M to 2.0 M, preferably 0.5 M to 1.8 M, and more preferably 0.7 M to 1.6 M. When the concentration of the lithium salt satisfies the above range, there is a sufficient effect of improving cycle properties during the high-temperature storage of a lithium secondary battery, and the viscosity of the non-aqueous electrolyte is suitable so that the wettability of the electrolyte may be improved.

The non-aqueous organic solvent includes at least one selected from a cyclic carbonate-based organic solvent, a linear carbonate-based organic solvent, a linear ester-based organic solvent and a cyclic ester-based organic solvent.

Specifically, the organic solvent may include a cyclic carbonate-based organic solvent, a linear carbonate-based organic solvent or a mixture thereof.

The cyclic carbonate-based organic solvent is an organic solvent having high viscosity and high permittivity, and is an organic solvent capable of dissociating a lithium salt well in an electrolyte, and specific examples thereof may include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and among them may include ethylene carbonate.

Furthermore, the linear carbonate-based organic solvent is an organic solvent having low viscosity and low permittivity, wherein typical examples thereof may include at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and specifically it may include ethyl methyl carbonate (EMC).

In addition, to prepare an electrolyte with a high ionic conductivity, the organic solvent may further include at least one ester-based organic solvent selected from the group consisting of a linear ester-based organic solvent and a cyclic ester-based organic solvent in addition to at least one carbonate-based organic solvent selected from the group consisting of the cyclic carbonate-based organic solvent and linear carbonate-based organic solvent.

Specific examples of the linear ester-based organic solvent may include at least one selected from methyl acetate, ethyl acetate, propyl acetate, methyl propionate, ethyl propionate, propyl propionate, and butyl propionate.

Also, the cyclic ester-based organic solvent may include at least one organic solvent selected from the group consisting of γ-butyrolactone, γ-valerolactone, γ-caprolactone, σ-valerolactone, and ε-caprolactone.

Meanwhile, the organic solvent may be used by adding organic solvents commonly used in non-aqueous electrolytes without limitation, if necessary. For example, it may further include at least one organic solvent selected from an ether-based organic solvent, a glyme-based solvent, and a nitrile-based organic solvent.

Any one selected from dimethyl ether, diethyl ether, dipropyl ether, methylethyl ether, methylpropyl ether, ethylpropyl ether, 1,3-dioxolane (DOL), and 2,2-bis (trifluoromethyl )-1,3-dioxolane (TFDOL), and a mixture of two or more thereof may be used as the ether-based solvent, but is not limited thereto.

The glyme-based solvent has a high dielectric constant and low surface tension compared to linear carbonate-based organic solvents, and may include at least one selected from dimethoxyethane (glyme, DME), diethoxyethane, diglyme, triglyme, and tetra-glyme (TEGDME) as a solvent with low reactivity with metals, but is not limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

In addition, in order to prevent a non-aqueous electrolyte from being decomposed to cause collapse of a negative electrode in a high output environment, or further improve low-temperature high-rate discharge characteristics, high-temperature stability, overcharge protection, and a battery swelling suppression effect at high temperatures, the non-aqueous electrolyte of the present disclosure may further include known electrolyte additives in the above non-aqueous electrolyte, if necessary.

Examples of the additional electrolyte additives may be at least one SEI-forming additive selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound may include vinylene carbonate (VC) or vinyl ethylene carbonate.

The halogen-substituted carbonate-based compound may include fluoroethylene carbonate (FEC).

The sultone-based compound may include at least one compound selected from the group consisting of 1,3-propane sultone (PS), 1,4-butane sultone, ethane sultone, 1,3-propene sultone (PRS), 1,4-butene sultone, and 1-methyl-1,3-propene sultone.

The sulfate-based compound may include ethylene sulfate (Esa), trimethylene sulfate (TMS), or methyl trimethylene sulfate (MTMS).

The phosphate-based compound may include one or more compounds selected from the group consisting of lithium difluoro (bisoxalato)phosphate, lithium difluorophosphate, tris(trimethylsilyl) phosphate, tris(trimethylsilyl)phosphite, tris(2,2,2-trifluoroethyl)phosphate, and tris(2,2,2-trifluoroethyl)phosphite.

The borate-based compound may include tetraphenylborate, lithium oxalyldifluoroborate(LiODFB), and lithium bis(oxalato)borate(LiB(C₂O₄)₂, LiBOB).

The nitrile-based compound may include at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, and the amine-based compound may include triethanolamine or ethylenediamine, and the silane-based compound may include tetravinylsilane.

The lithium salt-based compound is a compound different from the lithium salt included in the non-aqueous electrolyte, and may be lithium difluorophosphate (LiDFP), LiPO₂F₂ , LiBF₄ or the like.

Among the electrolyte additives, when a combination of vinylene carbonate (VC), ethylene sulfate (Esa), and lithium difluorophosphate (LiDFP) is included, it is possible to form a more robust SEI film on the surface of a negative electrode during the initial activation process of a secondary battery, and to suppress the generation of gas which may be generated due to the decomposition of an electrolyte at high temperatures, thereby improving high-temperature stability of the secondary battery.

Meanwhile, the additional electrolyte additives may be used as a mixture of two or more thereof, and may be included in an amount of 0.01 wt% to 30 wt%, specifically 0.1 wt% to 25 wt%, and preferably 1 wt% to 20 wt% based on a total weight of the non-aqueous electrolyte. When the content of the above additional electrolyte additives satisfies the above range, there is a more excellent effect of improving ion conductivity and cycle properties.

### Lithium Secondary Battery

The present disclosure also provides a lithium secondary battery comprising the above non-aqueous electrolyte.

Specifically, the lithium secondary battery includes a positive electrode including a positive electrode active material, a negative electrode including a negative electrode active material, a separator interposed between the positive electrode and the negative electrode, and the above-described non-aqueous electrolyte.

At this time, the lithium secondary battery of the present disclosure may be manufactured by a typical method known in the art. For example, the lithium secondary battery of the present disclosure may be manufactured by forming an electrode assembly in which a positive electrode, a negative electrode, and a separator between the positive electrode and the negative electrode are sequentially stacked, followed by inserting the electrode assembly in a battery case, and then injecting the non-aqueous electrolyte according to the present disclosure thereto.

### (1) Positive Electrode

The positive electrode may be manufactured by coating a positive electrode mixture slurry including a positive electrode active material, a binder, a conductive material, a solvent, and the like on a positive electrode current collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode active material is a compound capable of reversibly intercalating and deintercalating lithium, and may specifically include a lithium metal oxide including one or more metals such as cobalt, manganese, nickel, or aluminum and lithium. More specifically, the lithium metal oxide may be a lithium-manganese-based oxide(e.g.,, LiMnO₂, LiMn₂O₄ etc.), a lithium-cobalt-based oxide (e.g., LiCoO₂ etc.), a lithium-nickel-based oxide (e.g., LiNiO₂ etc.), a lithium-nickel-manganese-based oxide (e.g., LiNi_{1-Y}Mn_{Y}O₂(where 0<Y<1), LiMn_{2-Z}Ni_{Z}O₄(where 0 < Z < 2), etc.), a lithium-nickel-cobalt-based oxide (e.g., LiNi_{1-Y1}Co_{Y1}O₂(where 0<Y1<1) etc.), a lithium-manganese-cobalt-based oxide (e.g., LiCo_{1-Y2}Mn_{Y2}O₂(where 0<Y2<1), LiMn_{2-Z1}Co_{Z1}O₄(where 0 < Z1 < 2) etc.), a lithium-nickel-manganese-cobalt-based oxide (e.g., Li(NiₚCo_{q}Mnᵣ)O₂(where0 < p < 1, 0 < q < 1, 0 < r < 1, p+q+r=1)or Li(Niₚ₁Co_{q1}Mnᵣ₁)O₄(where 0 < p1 < 2, 0 < q1 < 2, 0 < r1 < 2, p1+q1+r1=2) etc.), or a lithium-nickel-cobalt-transition metal (M) oxide (e.g., Li(Niₚ₂Co_{q2}Mnᵣ₂Mₛ₂)O₂(where M is selected from the group consisting of Al, Fe, V, Cr, Ti, Ta, Mg and Mo, p2, q2, r2 and s2are each an atomic fraction of stand-alone elements, where 0 < p2 < 1, 0 < q2 < 1, 0 < r2 < 1, 0 < s2 < 1, p2+q2+r2+s2=1), and the like) and any one thereof or a compound of two or more thereof may be included.

Among these, due to the fact that the capacity properties and stability of a battery may be increased, the lithium metal oxide may be LiCoO₂, LiMnO₂, LiNiO₂, a lithium nickel-manganese-cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}CO_{0.2})O₂, Li(Ni_{0.7}Mn_{0.15}Co_{0.15})O₂, and Li(Ni_{0.8}Mn_{0.1}Co_{0.1})O₂, etc.), or a lithium-nickel-cobalt-aluminum oxide (e.g., Li(Ni_{0.8}Co_{0.15}Al_{0.05})O₂, etc.) or the like, and any one thereof or a mixture of two or more thereof may be used.

Among them, a positive electrode active material with a Ni content of 80 atm% or more may be used to increase the capacity characteristics of the battery the most. For example, the lithium transition metal oxide may include a compound represented by Formula 2 below.

[Formula 2] LiₓNiₐCo_{b}M¹_{c}M²_{d}O₂

In Formula 2 above, M¹ may be one or more selected from Mn and Al, and preferably may be Mn or a combination of Mn and Al.

M² may be one or more selected from the group consisting of Zr, B, W, Mg, Ce, Hf, Ta, La, Ti, Sr, Ba, F, P and S.

x represents an atomic fraction of lithium in a lithium transition metal oxide, and may be 0.90≤x≤1.1, preferably 0.95≤x≤1.08, and more preferably 1.0≤x≤1.08.

a represents an atomic fraction of nickel among all metal elements except for lithium in the lithium transition metal oxide, and may be 0.60≤a<1.0, 0.80≤a<1.0, preferably 0.80≤a≤0.95, and more preferably 0.80≤a≤0.90. When the content of the nickel satisfies the above range, high capacity characteristics may be achieved.

b represents an atomic fraction of cobalt among all metal elements except for lithium in the lithium transition metal oxide, and may be 0<b<0.4, 0<b<0.2, 0<b≤0.15, or 0.01≤b≤0.10.

c represents an atomic fraction of the element M¹ among all metal elements except for lithium in the lithium transition metal oxide, and may be 0<c<0.4, 0<c<0.2, 0<c≤0.15, or 0.01≤c≤0.10.

d represents an atomic fraction of the element M² among all metal elements except for lithium in the lithium transition metal oxide, and may be 0≤d≤0.1 or 0≤d≤0.05.

The positive electrode active material may be included in an amount of 60 wt% to 99 wt%, preferably 70 wt% to 99 wt%, and more preferably 80 wt% to 98 wt%, based on the total weight of the solids excluding the solvent in the positive electrode mixture slurry.

The binder is a component for assisting in coupling between an active material and a conductive material, and coupling to a current collector.

Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene (PE), polypropylene, an ethylene-propylene-diene monomer (EPDM), a sulfonated EPDM, a styrene-butadiene rubber, a fluoro rubber, and various copolymers thereof.

Typically, the binder may be included in an amount of 1 wt% to 20 wt%, preferably 1 wt% to 15 wt%, and more preferably 1 wt% to 10 wt%, based on the total weight of the solids excluding the solvent in the positive electrode mixture slurry.

The conductive material is a component for further improving the conductivity of the positive electrode active material, and may be added in an amount of 1 wt% to 20 wt % based on the total weight of the solids in the positive electrode mixture slurry. The conductive material is not particularly limited as long as it has conductivity without causing a chemical change in the battery, and for example, carbon powder such as carbon black, acetylene black, Ketjen black, channel black, furnace black, lamp black, or thermal black; graphite powder such as natural graphite with a well-developed crystal structure, artificial graphite, graphite, or the like; conductive fibers such as carbon fiber or metal fiber; conductive powder such as fluorocarbon powder, aluminum powder, and nickel powder; a conductive whiskers such as zinc oxide and potassium titanate; conductive metal oxides such as titanium oxide; conductive materials such as a polyphenylene derivative, and the like may be used.

Typically, the conductive material may be included in an amount of 1 wt% to 20 wt%, preferably 1 wt% to 15 wt%, and more preferably 1 wt% to 10 wt%, based on the total weight of the solids excluding the solvent in the positive electrode mixture slurry.

The solvent may include an organic solvent such as N-methyl-2-pyrrolidone (NMP), and may be used in an amount such that a preferred viscosity is achieved when the positive electrode active material, and selectively, a binder, a conductive material, and the like are included. For example, the solvent may be included in an amount such that the concentration of a solid including the positive electrode active material, and selectively the binder and the conductive material is 50 wt% to 95 wt%, preferably 70 wt% to 95 wt%, and more preferably 70 wt% to 90 wt%.

### (2) Negative Electrode

The negative electrode may be manufactured by, for example, coating a negative electrode mixture slurry containing a negative electrode active material, a binder, a conductive material, a solvent, and the like on a negative electrode current collector, or a graphite electrode made of carbon (C) or a metal itself may be used as the negative electrode.

For example, when the negative electrode is manufactured by coating a negative electrode mixture slurry on a negative electrode current collector, the negative electrode current collector generally has a thickness of 3 to 500 µm. The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, as in the positive electrode current collector, microscopic irregularities may be formed on the surface to improve the binding force of a negative electrode active material, and the negative electrode current collector may be used in various shapes such as a film, a sheet, a foil, a net, a porous body, a foam body, and a non-woven fabric body.

Furthermore, the negative electrode active material may include at least one selected from lithium metal, a carbon material capable of reversibly intercalating/deintercalating lithium ions, metal or an alloy of lithium and the metal, a metal composite oxide, a material which may be doped and undoped with lithium, or a transition metal oxide.

As the carbon material capable of reversibly intercalating/deintercalating the lithium ions, a carbon-based negative electrode active material generally used in a lithium ion secondary battery may be used without particular limitation, and as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, fired cokes and the like.

As the metal or the alloy of lithium and the metal, a metal selected from Cu, Ni, Na, K, Rb, Cs, Fr, Be, Mg, Ca, Sr, Si, Sb, Pb, In, Zn, Ba, Ra, Ge, Al and Sn, or an alloy of lithium and the metal may be used.

Any one from PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0≤x≤1), LiₓWO₂(0≤x≤1) and SnₓMe₁₋ₓMe'_{y}O_{z} (Me: Mn, Fe, Pb, Ge; Me': Al, B, P, Si, Groups I, II and III elements of the periodic table, or halogen; 0<x≤1; 1≤y≤3; 1≤z≤8) may be used as the metal composite oxide.

The material, which may be doped and undoped with lithium, may include Si, SiOₓ(0<x≤2), a Si-Y alloy (where Y is an element selected from alkali metal, alkaline earth metal, a Group 13 element, a Group 14 element, transition metal, a rare earth element, or a combination thereof, and is not Si), Sn, SnO₂, Sn-Y (where Y is an element selected from alkali metal, alkaline earth metal, a Group 13 element, a Group 14 element, transition metal, a rare earth element, or a combination thereof, and is not Sn), and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, and lithium vanadium oxide.

The negative electrode active material may be included in an amount of 60 wt % to 99 wt%, preferably 70 wt % to 99 wt%, and more preferably 80 wt% to 98 wt%, based on the total weight of the solids in the negative electrode mixture slurry.

The binder is a component for assisting in coupling between a conductive material, an active material and a current collector. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer (EPDM), a sulfonated EPDM, a styrene-butadiene rubber, a fluoro rubber, and various copolymers thereof.

Typically, the binder may be included in an amount of 1 wt% to 20 wt%, preferably 1 wt% to 15 wt%, and more preferably 1 wt% to 10 wt%, based on the total weight of the solids excluding the solvent in the negative electrode mixture slurry.

The conductive material is a component for further improving the conductivity of the negative electrode active material, and may be added in an amount of 1 wt% to 20 wt% based on the total weight of the solids in the negative electrode mixture slurry. The conductive material is not particularly limited as long as it has conductivity without causing a chemical change in the battery, and for example, carbon powder such as carbon black, acetylene black, Ketjen black, channel black, furnace black, lamp black, or thermal black; graphite powder such as natural graphite with a well-developed crystal structure, artificial graphite, graphite, or the like; conductive fibers such as carbon fiber or metal fiber; conductive powder such as fluorocarbon powder, aluminum powder, and nickel powder; a conductive whiskers such as zinc oxide and potassium titanate; conductive metal oxides such as titanium oxide; conductive materials such as a polyphenylene derivative, and the like may be used.

Typically, the conductive material may be included in an amount of 1 wt% to 20 wt%, preferably 1 wt% to 15 wt%, and more preferably 1 wt% to 10 wt%, based on the total weight of the solids excluding the solvent in the negative electrode mixture slurry.

The solvent may include an organic solvent such as N-methyl-2-pyrrolidone (NMP), and may be used in an amount such that a preferred viscosity is achieved when the negative electrode active material, and selectively, a binder, a conductive material, and the like are included. For example, the solvent may be included in an amount such that the concentration of a solid including the negative electrode active material, and selectively the binder and the conductive material is 50 wt% to 95 wt%, preferably 70 wt% to 90 wt%.

As the negative electrode, when a metal itself is used, the negative electrode may be manufactured by physically bonding, roll-pressing, or depositing a metal on a metal thin film itself or the negative electrode current collector. The depositing method may be electrical vapor deposition or chemical vapor deposition.

For example, the metal bonded/roll-pressed/deposited on the metal thin film itself or the negative electrode current collector may include one type of metal selected from lithium (Li), nickel (Ni), tin (Sn), copper (Cu), or indium (In), or an alloy of two types of metals thereof.

### (3) Separator

In addition, as the separator, a common porous polymer film typically used as a separator, for example, a porous polymer film prepared with a polyolefin-based polymer, such as an ethylene homopolymer, a propylene homopolymer, an ethylene/butene copolymer, an ethylene/hexene copolymer, and an ethylene/methacrylate copolymer may be used alone, or in a laminated form thereof. Alternatively, a typical porous non-woven fabric, for example, a non-woven fabric formed of a glass fiber having a high melting point or polyethylene terephthalate fiber may be used, but the present disclosure is not limited thereto. Also, a coated separator including a ceramic component or a polymer material may be used to secure heat resistance or mechanical strength, and may be selectively used in a single-layered or a multi-layered structure.

A shape of the lithium secondary battery of the present disclosure is not particularly limited, but a cylindrical type using a can, a prismatic type, a pouch type, or a coin type may be used.

Hereinafter, the present disclosure will be described in detail, according to examples. However, the invention may be embodied in many different forms and should not be construed as being limited to the embodiments set forth herein. It will be apparent to those skilled in the art that various modifications and alterations may be possible without departing from the scope and spirit of the present disclosure, and such modifications and alterations are duly included in the present disclosure as defined by the appended claims.

### Examples

### Example 1

### (Preparation of Non-Aqueous Electrolyte)

A non-aqueous solvent was prepared by dissolving LiPF₆ in an organic solvent (ethylene carbonate (EC):ethylmethyl carbonate (EMC) = 30:70 volume ratio) such that the LiPF₆ was 1.3 M and vinylene carbonate (VC) was 0.5 wt%, and to 99.5 g of the non-aqueous solvent, 0.5 g of a compound of Formula 1-2a below was introduced to prepare a non-aqueous electrolyte.

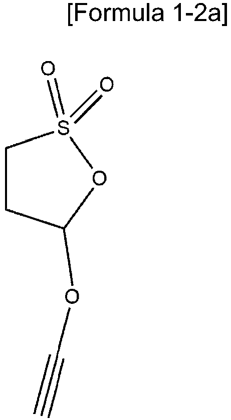

### (Preparation of Lithium Secondary Battery)

A positive electrode active material (LiNi_{0.8}Co_{0.1}Mn_{0.1}O₂), a conductive material (carbon nanotube), and a binder(polyvinylidene fluoride) were added to N-methyl-2-pyrrolidone (NMP) as a solvent, at a weight ratio of 97.74 : 0.70 : 1.56 to prepare a positive electrode slurry (solid content: 60 wt%). The positive electrode slurry was applied on one surface of a positive electrode current collector (Al thin film) having a thickness of 12 µm, dried and then roll-pressed to prepare a positive electrode.

A negative electrode active material (graphite), a negative electrode active material (SiO), a conductive material (carbon black) and a binder (styrene-butadiene rubber) were added in a weight ratio of 93.8 : 5.0 : 0.3 : 0.9 to H₂O, which was a solvent, to prepare a negative electrode slurry (solid content 40 wt%). The negative electrode slurry was applied on one surface of a negative electrode current collector (Cu thin film) having a thickness of 8 µm, dried and then roll-pressed to prepare a negative electrode.

In a dry room, a polyethylene separator was interposed between the positive electrode and the negative electrode prepared above, and then the prepared non-aqueous electrolyte was injected thereto to prepare a secondary battery.

### Example 2

A secondary battery was prepared in the same manner as in Example 1 except that 1.0g of the compound of Formula 1-2a above was introduced to 99.0 g of the non-aqueous solvent prepared in Example 1 to prepare a non-aqueous electrolyte.

### Example 3

A secondary battery was prepared in the same manner as in Example 1 except that 1.0g of the compound of Formula 1-2c below was introduced to 99.0g of the non-aqueous solvent prepared in Example 1 to prepare a non-aqueous electrolyte.

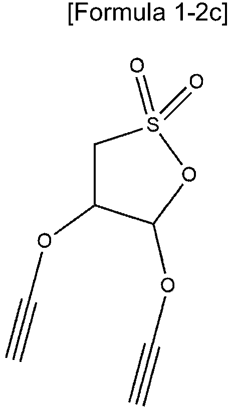

### Example 4

A secondary battery was prepared in the same manner as in Example 1 except that 3.0g of the compound of Formula 1-2a above was introduced to 97.0 g of the non-aqueous solvent prepared in Example 1 to prepare a non-aqueous electrolyte.

### Example 5

A secondary battery was prepared in the same manner as in Example 1 except that 5.0g of the compound of Formula 1-2a above was introduced to 95.0g of the non-aqueous solvent prepared in Example 1 to prepare a non-aqueous electrolyte.

### Comparative Example 1

A secondary battery was prepared in the same manner as in Example 1 except that 100 g of the non-aqueous solvent prepared in Example 1 was used to prepare a non-aqueous electrolyte.

### Comparative Example 2

A secondary battery was prepared in the same manner as in Example 1 except that 0.5g of the compound of Formula A below was introduced to 99.5g of the non-aqueous solvent prepared in Example 1 to prepare a non-aqueous electrolyte.

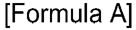

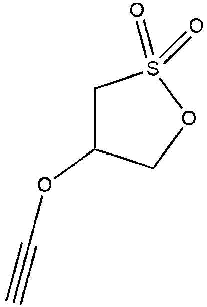

### Experimental Examples 1- Evaluation of high-temperature cycle characteristics

The cycle characteristics were evaluated for each of the secondary batteries prepared in Examples 1 to 5 and Comparative Examples 1 and 2.

Specifically, each of the secondary batteries prepared in Examples 1 to 5 and Comparative Examples 1 and 2 was charged to 4.3V at a current of 1.0C at 45°C under a CC condition and to 1/20 C under a CV condition, and was then discharged to 2.5V at a current of 1.0C under a CC condition, which was set as one cycle. After 100 cycles of charging and discharging were performed, the resistance increase rate compared to the initial resistance after 100 cycles was measured. The results are presented in Table 1 below.

**[Table 1]**

| | Resistance increase rate (%) |
|---|---|
| Example 1 | 13.4% |
| Example 2 | 8.3% |
| Example 3 | 10.2% |
| Example 4 | 11.8% |
| Example 5 | 12.9% |
| Comparative Example 1 | 16.4% |
| Comparative Example 2 | 15.3% |

As shown in Table 1, Examples 1 to 5, which used the additive for a non-aqueous electrolyte of the present disclosure had a lower resistance increase rate, thereby exhibiting superior life characteristics compared to Comparative Example 1, which did not use the additive. In addition, it can be understood that compared to the additive of Formula 1 of the present disclosure, in which -OC=CH is substituted at the 3rd carbon of the propane sultone ring, the compound of Formula A of Comparative Example 2 formed a less solid film on the positive electrode surface. For this reason, the film formed by the compound of Formula A exhibited an inferior resistance increase rate due to greater oxidation decomposition on the positive electrode surface.

### Experimental Examples 2- Evaluation of high-temperature storage characteristics

The high-temperature storage characteristics were evaluated for each of the secondary batteries prepared in Examples 1 to 5 and Comparative Examples 1 and 2.

Specifically, after the secondary batteries prepared in Examples 1 to 5 and Comparative Examples 1 and 2 were charged to 4.3 V, they were stored at 60°C for 4 weeks.

Before storage, the volume of the fully charged secondary batteries was measured and set as the initial volume of the secondary battery.

After 4 weeks, the volume of the stored secondary batteries was remeasured and the increases in volume during the 4-week storage were calculated. The percentage ratio of the increased volume to the initial volume of the secondary battery was calculated to obtain the volume increase rate after 4 weeks. The results are presented in Table 2 below.

**[Table 2]**

| | Volume increase rate (%) |
|---|---|
| Example 1 | 9.2% |
| Example 2 | 7.2% |
| Example 3 | 6.9% |
| Example 4 | 6.3% |
| Example 5 | 4.4% |
| Comparative Example 1 | 12.8% |
| Comparative Example 2 | 10.6% |

As shown in Table 2, the secondary batteries in Examples 1 to 5 exhibited a smaller volume increase rate after 4 weeks and generated less gas at high temperatures compared to the secondary battery of Comparative Example 1, which did not use the same. In addition, it can be understood that compared to the additive of Formula 1 of the present disclosure, in which -OC≡CH is substituted at the 3rd carbon of the propane sultone ring, the compound of Formula A of Comparative Example 2 formed a less solid film on the positive electrode surface. For this reason, it can be understood that the film formed by the compound of Formula A easily decomposes when stored at high temperatures, which increases the amount of gas generated due to increased side reactions.

## Claims

1. A non-aqueous electrolyte comprising lithium salt;
an organic solvent; and
a compound represented by Formula 1: 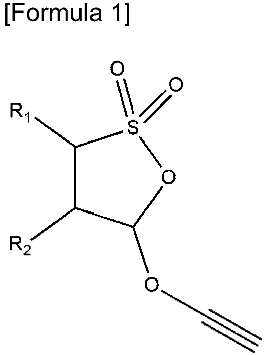
wherein, in Formula 1, R₁ and R₂ are each independently any one selected from a group consisting of H, -OC=CH, F, a nitrile group, an alkyl group having 1 to 10 carbon atoms, an alkenyl group having 2 to 10 carbon atoms, and an alkynyl group having 2 to 10 carbon atoms.

2. The non-aqueous electrolyte of claim 1,
wherein the compound of Formula 1 is any one selected from a group consisting of additives for a non-aqueous electrolyte represented by Formulas 1-2a to 1-2e.

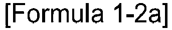

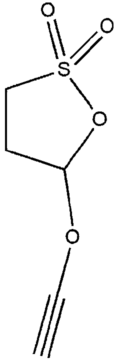

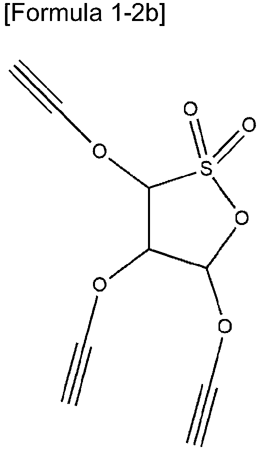

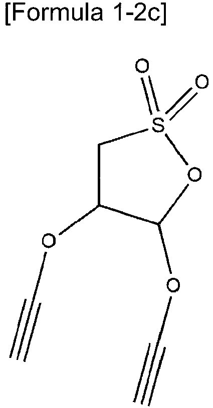

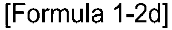

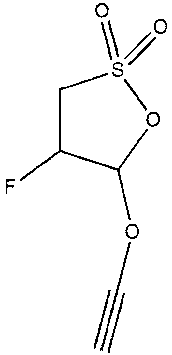

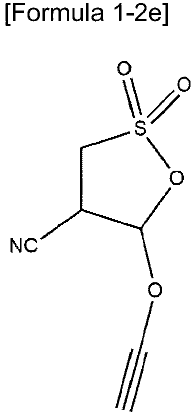

3. The non-aqueous electrolyte of claim 1,
wherein the compound of Formula 1 is included in an amount of 0.01 parts by weight to 10 parts by weight based on 100 parts by weight of the non-aqueous electrolyte.

4. The non-aqueous electrolyte of claim 1,
wherein the lithium salt is included at a concentration of 0.5 M to 2.0 M.

5. The non-aqueous electrolyte of claim 1,
wherein the lithium salt is one or more selected from a group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂, LiN(SO₂CF₂CF₃)₂ and LiN(SO₂CF₃)₂.

6. The non-aqueous electrolyte of claim 1,
wherein the organic solvent includes at least one selected from a cyclic carbonate-based organic solvent, a linear carbonate-based organic solvent, a linear ester-based organic solvent and a cyclic ester-based organic solvent.

7. The non-aqueous electrolyte of claim 1,
further comprising at least one selected from a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound as an additive.

8. A lithium secondary battery comprising a positive electrode;
a negative electrode, and
the non-aqueous electrolyte of any one of claims 1 to 7.

9. The lithium secondary battery of claim 8,
wherein the positive electrode is a lithium nickel-based oxide represented by Formula 2 as a positive electrode active material:
[Formula 2] LiₓNiₐCo_{b}M¹_{c}M²_{d}O₂
wherein, in Formula 2, M¹ is Mn, Al or a combination thereof, and M² is one or more selected from a group consisting of Zr, W, Y, Ba, Ca, Ti, Mg, Ta and Nb, where 0.8≤x≤1.2, 0.6≤a<1, 0<b<0.4, 0<c<0.4, and 0≤d≤0.1.

10. The lithium secondary battery of claim 8,
wherein the negative electrode includes SiOₓ (0≤x<2) as a negative electrode active material.
